# EUROPEAN PATENT APPLICATION

(11) **EP 3 778 164 A1**
(43) Date of publication of application: **17.02.2021**
(21) Application number: 19822631.8
(22) Date of filing: 31.05.2019
(51) Int. Cl.: B28C 7/04, C04B 22/14, C04B 24/06, C04B 24/30

(54) **METHOD FOR FEEDING HARDENING ACCELERATOR FOR CONCRETE SURFACE FINISH**

(30) Priority: 18.06.2018 JP 2018115253
(71) Applicant: Denka Company Limited, Tokyo 103-8338 (JP); Shimizu Corporation, Chuo-ku Tokyo 104-8370 (JP)
(72) Inventor: ISHII, Yasuhiro, Itoigawa-city, Niigata 9490393 (JP); MIYAGUCHI, Katsuichi, Itoigawa-city, Niigata 9490393 (JP); URANO, Shinji, Tokyo 104-8370 (JP); YODA, Yuya, Tokyo 104-8370 (JP)
(74) Representative: Ter Meer Steinmeister & Partner
(86) International application number: PCT/JP2019/021742
(87) International publication number: WO 2019/244601

(57) **Abstract**

Provided is a method of charging an accelerator for concrete surface finishing, including enclosing an accelerator for concrete surface finishing in a package composed of water-soluble paper to form an inclusion body, and charging the inclusion body into a concrete mixer and/or an agitator vehicle to mix with the concrete.

## Description

### Technical Field

The present invention relates to a method of charging an accelerator for concrete surface finishing in concrete construction in the fields of civil engineering and construction.

### Background Art

The construction industry is said to be an industry in which so-called 3K (dangerous, demeaning and dirty) work is frequent. The Ministry of Land, Infrastructure, Transport and Tourism aims at a new 3K (salary is good, vacation is available, and hope is available) in "White Paper on Land, Infrastructure, Transport and Tourism in Japan" and "Priority Policy", and is promoting reform of the construction industry. For example, even in concrete construction, under the keyword "i-Construction", this is a policy for promoting work efficiency, labor saving and light labor. Among them, it is desired to reduce overtime work in relation to improvement of working environment of workers at construction sites.

In concrete construction, surface finishing is performed after placing concrete. The quality of this surface finishing affects the cracking and strength of the concrete and ultimately the durability of the concrete structure. Examples of the surface finishing of concrete include trowel finishing for smoothing with a metal trowel, a wood trowel, a plastic trowel, a hard rubber trowel, or the like, and vibrator finishing for smoothing with a vibrator or the like for surface finishing. The surface finishing is mainly performed using a trowel.

In the surface finishing by the trowel or the like, at the time of starting the final surface finishing work, the timing at which bleeding starts to occur is considered to be the optimum timing, and the work cannot be performed until that timing. Since the timing is immediately before the setting start time of concrete, the plasterer stands by for several hours in concrete placing particularly in a cold season in which the outside air temperature is low. This waiting time leads to a reduction in work efficiency and often leads to overtime work.

As a concrete surface finishing process, a method using a surface finishing machine (PTL 1), a method using a curing mat in combination with rough leveling (PTL 2), a method of trowel finishing using a resin film (PTL 3), a method of vacuum degassing from a concrete surface through a filter mat (PTL 4), a method using a nonwoven fabric sheet (PTLs 5 and 6), and the like are known. However, there is a problem in that it is necessary to use special equipment and materials, and it takes time and effort to perform extra processes and finishing by using special techniques. In addition, regarding the surface finishing of concrete, a technique has been developed in which a special material and equipment are not required by using a surface finishing agent such as a polymer dispersion (PTL 7), a surfactant (PTL 8), or an aqueous curing agent (PTL 9) in combination. However, although these surface finishing agents can improve the quality of trowel finishing of the concrete surface, it is impossible to shorten the time until trowel finishing becomes possible, and it is impossible to shorten the process.

In addition, regarding a process of charging an admixture into an agitator vehicle, as a method of easily and safely charging the admixture without requiring labor and equipment for charging, a method of charging an admixture by enclosing the admixture in water-soluble paper is known (PTLs 10 and 11).

### Citation List

### Patent Literature

PTL 1: JP 02044653 B
PTL 2: JP 06-172060 A
PTL 3: JP 10-018566 A
PTL 4: JP 03398716 B
PTL 5: JP 2000-015619 A
PTL 6: JP 05830051 B
PTL 7: JP 01887894 B
PTL 8: JP 04574316 B
PTL 9: JP 2014-173246 A
PTL 10: JP 06-155444 A
PTL 11: JP 2001-252918 A

### Summary of Invention

### Technical Problem

As described above, in the conventional techniques for the surface finishing process of concrete, special materials and equipment and labor are required to obtain good smoothness, and in addition, it is impossible to shorten the time from placing concrete until trowel finishing becomes possible, and it is impossible to shorten the process.

In the case where the surface finishing agent is in the form of a powder, the surface finishing agent is easily scattered when the surface finishing agent is charged into the agitator vehicle, and is sucked by an exhaust device for the purpose of suppressing the generation of dust, so that it is difficult to mix a predetermined amount of the surface finishing agent into the agitator vehicle. In addition, it is difficult to uniformly disperse the surface finishing agent when the surface finishing agent is charged in the form of a powder, and it is necessary to ensure a long mixing time of concrete in order to uniformly disperse the surface finishing agent. Further, when the powder is charged as it is, there is a concern that a problem in work safety may occur.

Accordingly, it is an object of the present invention to provide a method of charging an accelerator for concrete surface finishing, which is capable of easily, safely, stably and uniformly mixing an accelerator for concrete surface finishing as a surface finishing agent into concrete and sufficiently exhibiting the function of the accelerator for concrete surface finishing.

### Solution to Problem

The present inventors have conducted studies to solve the above problems and found that the problems can be solved by the present invention described below. That is, the present invention is as follows.
[1] A method of charging an accelerator for concrete surface finishing, including enclosing an accelerator for concrete surface finishing in a package composed of water-soluble paper to form an inclusion body, and charging the inclusion body into a concrete mixer and/or an agitator vehicle to mix with the concrete.
[2] The method of charging an accelerator for concrete surface finishing according to [1], wherein the water-soluble paper contains wood pulp as a raw material.
[3] The method of charging an accelerator for concrete surface finishing according to [2], wherein the raw material of the water-soluble paper further contains at least one water-soluble paper additive selected from the group consisting of polysaccharides, poval, cellulose, polyvinyl alcohol, carbomethyl cellulose, and starch, and the content of the wood pulp is 75 to 95% by mass with respect to the total of the wood pulp and the water-soluble paper additive.
[4] The method of charging an accelerator for concrete surface finishing according to any one of [1] to [3], wherein when 10 g of the water-soluble paper is added to 500 mL of water at 20°C which has been stirred at 800 rpm with a stirrer, an aggregate derived from the water-soluble paper cannot be visually observed within 30 seconds after the addition.
[5] The method of charging an accelerator for concrete surface finishing according to any one of [1] to [4], wherein the package is at least one of a bag and a box.
[6] The method of charging an accelerator for concrete surface finishing according to any one of [1] to [5], wherein when the accelerator for trowel finishing is mixed in an amount of 4 kg/m³ with respect to 1 m³ of concrete, a time from immediately after placing concrete after the mixing until surface finishing of concrete becomes possible is shortened at an ambient temperature of 2 to 8°C, as compared with a concrete having the same mix proportion except that the accelerator for concrete surface finishing is not mixed.
[7] The method of charging an accelerator for concrete surface finishing according to any one of [1] to [6], wherein when the accelerator for trowel finishing is mixed in an amount of 4 kg/m³ with respect to 1 m³ of concrete, the quality of the finished surface of the concrete after the mixing is reduced by 60% or more in water permeability and scaling amount, respectively, as compared with a concrete having the same mix proportion except that the accelerator for concrete surface finishing is not mixed.
[8] The method of charging an accelerator for concrete surface finishing according to any one of [1] to [7], wherein the accelerator for trowel finishing contains an aluminum sulfonate.
[9] The method of charging an accelerator for concrete surface finishing according to [8], wherein the aluminum sulfonate has an average particle diameter of 500 pm or less.
[10] The method of charging an accelerator for concrete surface finishing according to [8] or [9], wherein the accelerator for trowel finishing further contains at least one selected from the group consisting of a melamine-based compound, an oxycarboxylic acid and/or a salt thereof.
[11] The method of charging an accelerator for concrete surface finishing according to any one of [1] to [10], wherein the inclusion body is directly charged into concrete in a concrete mixer and/or an agitator vehicle, or the inclusion body is charged into the concrete mixer and/or the agitator vehicle by air force feed.

### Advantageous Effects of Invention

According to the method of charging an accelerator for concrete surface finishing of the present invention, the accelerator for concrete surface finishing as a surface finishing agent can be easily, safely, stably and uniformly mixed into concrete, and the function of the accelerator for concrete surface finishing can be sufficiently exhibited.

Here, the "function of the accelerator for concrete surface finishing" refers to a function capable of shortening the time from placing concrete until surface finishing becomes possible by adding the accelerator for concrete surface finishing, as compared with the case where the accelerator for concrete surface finishing is not added.

### Description of Embodiments

Hereinafter, the present invention will be described in detail.

Note that, as used herein, the terms "parts" and "%" are based on mass unless otherwise specified. The concrete of the present invention is a generic term for cement paste, cement mortar, and cement concrete. Further, although trowel finishing is described below as a preferred example of surface finishing, the same applies to other surface finishes.

In the method of charging the accelerator for concrete surface finishing of the present invention, first, the accelerator for concrete surface finishing is enclosed in a package composed of water-soluble paper to form an inclusion body. The inclusion body is then charged into a concrete mixer and/or an agitator vehicle and mixed with the concrete.

The water-soluble paper is not particularly limited as long as aggregates derived from the water-soluble paper are hardly generated when the water-soluble paper is added to water. In particular, when 10 g of the water-soluble paper is added to 500 mL of water at 20°C, which has been stirred at 800 rpm with a stirrer (for example, manufactured by Ikeda Scientific Co., Ltd.), it is preferable that an aggregate derived from the water-soluble paper cannot be visually observed within 30 seconds after the addition. By using such a water-soluble paper, it is possible to rapidly dissolve or decompose the water-soluble paper and uniformly mix the enclosed accelerator for concrete surface finishing into the concrete.

In addition, the accelerator for concrete surface finishing can ensure good and smooth trowel finished surfaces, can shorten the time from placing concrete until trowel finishing becomes possible, leads to increased work efficiency of the plasterer, and can have an effect of reducing overtime work at the construction site, and is also referred to as an "accelerator for trowel finishing".

It is preferred for the accelerator for trowel finishing that when the accelerator for trowel finishing is mixed in an amount of 4 kg/m³ with respect to 1 m³ of concrete, a time from immediately after placing concrete after the mixing until surface finishing of concrete becomes possible is shortened at an ambient temperature of 2 to 8°C, as compared with a concrete having the same mix proportion except that the accelerator for concrete surface finishing is not mixed.

With such an accelerator for trowel finishing, it is possible to shorten the time until the final trowel finishing is performed even at a low temperature, and the construction efficiency of the construction site can be improved.

In addition, it is preferred for the accelerator for trowel finishing that when the accelerator for trowel finishing is mixed in an amount of 4 kg/m³ with respect to 1 m³ of concrete, the quality of the finished surface of the concrete after the mixing is reduced by 60% or more (preferably 70% or more) in water permeability and scaling amount, respectively, as compared with a concrete having the same mix proportion except that the accelerator for concrete surface finishing is not mixed.

The accelerator for concrete surface finishing preferably contains an aluminum sulfonate, and more preferably is composed of an aluminum sulfonate. Further, the accelerator for concrete surface finishing preferably contains at least one selected from the group consisting of a melamine-based compound, oxycarboxylic acid and/or a salt thereof.

Examples of the aluminum sulfonate include various aluminum sulfates. Aluminum sulfate is represented by the general formula Al₂(SO₄)₃·nH₂0, wherein n is in the range of 0 to 18. As aluminum sulfate, anhydrous aluminum sulfate and aluminum sulfate having various numbers of crystal water exist, and any of them can be used in the present invention.

The average particle diameter of the aluminum sulfonate is not limited, but is preferably 500 pm or less, and more preferably 325 pm or less. When the average particle diameter of the aluminum sulfonate is 500 pm or less, good trowel finishing properties are obtained, and bleeding after trowel finishing is easily suppressed. The average particle diameter is measured by a laser diffraction/scattering particle size distribution analyzer manufactured by Horiba, Ltd.

The melamine-based compound is preferably a powdery melamine-based compound, and examples thereof include a methylol melamine condensate, a melamine sulfonate, and a melamine sulfonate-formalin condensate. Specifically, the product name "Sikament FF" manufactured by Sika Ltd. can be used.

Examples of the oxycarboxylic acid include tartaric acid, citric acid, and gluconic acid, and examples of the oxycarboxylic salt include salts of the above oxycarboxylic acids. These may be mixed alone or in combination of two or more.

The admixture amount of the accelerator for concrete surface finishing is preferably 2 kg/m³ to 10 kg/m³ with respect to 1 m³ of the concrete. When the amount is 2 kg/m³ or more, it is easy to obtain an effect of shortening the time from immediately after placing the concrete until the trowel finishing becomes possible. When the amount is 10 kg/m³ or less, it is easy to obtain an effect of shortening the time from immediately after placing the concrete until the trowel finishing becomes possible, and the fluidity retentivity of the concrete can be satisfactorily maintained. In the present invention, the accelerator for concrete surface finishing is charged into the concrete in a form of an inclusion body in which the accelerator is enclosed in a package. Thus, the accelerator for concrete surface finishing can be easily, safely, stably, and uniformly mixed into the concrete.

The water-soluble paper used in the present invention preferably contains wood pulp as a raw material. The raw material of the water-soluble paper preferably further contains at least one water-soluble paper additive selected from the group consisting of polysaccharides, poval, cellulose, polyvinyl alcohol, carbomethyl cellulose, and starch.

The content of the wood pulp with respect to the total of the wood pulp and the water-soluble paper additive is preferably 75 to 95%, and more preferably 80 to 90%. The content of the water-soluble paper additive with respect to the total of the wood pulp and the water-soluble paper additive is preferably 5 to 25%, and more preferably 10 to 20%.

When the content is equal to or greater than the lower limit of the above-described range, an adhesive raw material necessary for heat seal in the production of a package composed of the water-soluble paper is not insufficient, and the production is facilitated. When the content is equal to or less than the upper limit of the above-described range, entrainment of air into the concrete is suppressed.

The amount of the package according to the present invention to be used is preferably 2 to 10 bags, more preferably 4 to 8 bags, per 1 m³ of concrete in a state where 250 g/L or more and 1200 g/L or less of the accelerator for concrete surface finishing is enclosed.

The package composed of the water-soluble paper according to the present invention is preferably at least one of a bag and a box.

When the package according to the present invention is a bag, the dimensions thereof are preferably 15 to 35 cm in the width, and more preferably 20 to 30 cm. The height is preferably 10 to 50 cm, and more preferably 15 to 40 cm. The depth (the depth of the bottom of the bag) is preferably 5 to 20 cm.

When the package according to the present invention is a box, the dimensions thereof are preferably 15 to 35 cm in the width, and more preferably 20 to 30 cm. The length is preferably 10 to 50 cm, and more preferably 15 to 40 cm. The height is preferably 5 to 20 cm.

Within each of the above ranges, the amount of the accelerator for concrete surface finishing to be enclosed in the packaging bag is easily enclosed at 250 g/L or more and 1200 g/L or less, and the number of bags to be added per 1 m³ can be prevented from being excessively increased. In addition, the time required for dispersion is shortened, and it is possible to prevent insufficient dispersion after mixing concrete, or to prevent a bag from being caught in a pressure feed pipe and broken when air is force-fed.

In the bag according to the present invention, the opening is preferably sealed by means such as heat seal, adhesive seal, or thread sewing seal after the accelerator for concrete surface finishing is filled.

The box according to the present invention is preferably covered with a lid and sealed by the above means after the accelerator for concrete surface finishing is filled.

The bag and the box before being filled with the accelerator for concrete surface finishing can be produced by a known method using the water-soluble paper described above.

The inclusion body according to the present invention may be directly charged into the concrete in the concrete mixer and/or the agitator vehicle or may be charged into the concrete mixer and/or the agitator vehicle by air force feed.

In the case of charging the inclusion body into the agitator vehicle, concretely, the inclusion body may be manually charged into the agitator vehicle immediately after the arrival of the concrete agitator vehicle, or the inclusion body may be pressure-fed by utilizing compressed air by a compressor using a hose of about 5 m to 10 m. In this case, for example, an air conveying machine "Line Vac" manufactured by EXAIR Corporation can be used.

In the present invention, the cement used for concrete is not particularly limited, and examples thereof include various types of portland cement such as ordinary, high-early-strength, ultra-high-early-strength, low-heat, and moderate-heat portland cements; various types of blended cement obtained by mixing blast-furnace slag, fly-ash, silica, limestone fine powder, or the like with these portland cements; and waste-utilizing cement, so-called ecocement.

In addition, the admixture and the like are not particularly limited, and known materials can be appropriately selected and used.

### Examples

Hereinafter, the present invention will be described in detail with reference to Examples, but the present invention is not limited thereto.

### (Experimental Example 1)

Concrete having a unit cement amount of 310 kg/m³, a unit water amount of 170.5 kg/m³, s/a = 43%, an air amount of 4.5 ± 1.5%, a slump of 12 ± 2.5 cm, and a water-reducing admixture addition ratio of cement × 1.0% was produced as 3 m³ in a ready-mixed concrete factory, and after 30 minutes including the transportation time from the shipment from the ready-mixed concrete factory, the accelerator for concrete surface finishing was directly charged into an agitator vehicle in the form of a powder or in the form of an inclusion body in which the accelerator was enclosed, and the mixture was mixed by rotary stirring for 3 minutes. Thereafter, the concrete was unloaded for each 1 m³, and the properties of the concrete were evaluated in the order of unloading as "before" (sampling time: early stage), "during" (sampling time: middle stage), and "after" (sampling time: late stage). All the tests were carried out in an environment of an outside air temperature (environmental temperature) of 2 to 8°C.

As the accelerator for concrete surface finishing, aluminum sulfonate A described later was used.

The materials used in the preparation of concrete are as follows.
Cement: ordinary portland cement, commercial product, Blaine specific surface area 3200 cm²/g.
Coarse aggregate: crushed stone, density 2.64 g/cm³.
Fine aggregate: washed sea sand, chloride content 0.02%, density 2.62 g/cm3.
Water: tap water
Water-reducing admixture: lignin-based water-reducing admixture, manufactured by GCP Chemicals Co., Ltd.
Accelerators for concrete surface finishing: The following aluminum sulfonates A to D were used.
Aluminum sulfonate A: A commercially available product was pulverized to form a powder having an average particle diameter of 321 µm.
Aluminum sulfonate B: A commercially available product was pulverized to form a powder having an average particle diameter of 492 µm.
Aluminum sulfonate C: A commercially available product was pulverized to form a powder having an average particle diameter of 621 µm.
Aluminum sulfonate D: A commercially available product was pulverized to form a powder having an average particle diameter of 211 µm.

The inclusion body was prepared as follows. That is, a bag-shaped bag was prepared from the following water-soluble paper, non-water-soluble paper or water-soluble film, and the accelerator for concrete surface finishing was enclosed in the bag in an equal amount to the number of bags shown in Tables 1 and 5 so as to have 500 g/L. Thereafter, the opening was sealed to prepare an inclusion body. Note that, as the seal, a crimp seal in which 10 portions were press-bonded using a Harinacs Press Staple-free Stapler (manufactured by KOKUYO Co., Ltd.) was employed.

Water-soluble paper: Three kinds of wood pulp contents of 75%, 85%, and 95%; three kinds of basis weight and thickness were the same, basis weight 60 g/m², thickness 110 pm; the dispersion time was 20 seconds or less; the water-soluble paper was a commercially available product; and the sealing in the production of a bag was pressure-adhesive seal.

Non-water-soluble paper: content of wood pulp 65%; basis weight 150 g/m², thickness 280 µm: the dispersion time was more than 90 seconds; the water-soluble paper was a commercially available product; and the sealing in the production of a bag was pressure-adhesive seal.

Water-soluble film: polyvinyl alcohol film; basis weight 30 g/m², thickness 40 pm, the dispersion time was 30 seconds or less; the water-soluble paper was a commercially available product; and the sealing in the production of a bag was pressure-adhesive seal.

The dimensions of the various bags (bag bodies) are as shown in Table 1.

The dispersion time of the water-soluble paper, the non-water-soluble paper, and the water-soluble film was determined by adding 10 g of these samples to a beaker (capacity 1000 ml) containing 500 ml of water at 20°C, stirring the mixture with a stirrer at 800 rpm, and visually measuring the time until aggregates disappeared.

### (Test and Evaluation Method)

Trowel finishing time: 24 formworks of 30 × 30 × 20 cm were prepared and filled with concrete, and the concrete surfaces were trowel finished one by one with a gold trowel every one hour after placing the concrete. The condition of the concrete surface after 24 hours from the trowel finishing was observed, and the shortest time from immediately after placing the concrete until the trowel finishing become possible, which was suitable for the trowel finishing satisfying two conditions: (1) the concrete surface was smooth; and (2) no settlement was observed from the upper end of the concrete formwork was measured.

Visual observation of concrete surface: The concrete surface subjected to trowel finishing at a time suitable for trowel finishing was observed. The case where no efflorescence was observed on the concrete surface was evaluated as A, and the case where efflorescence was observed on the concrete surface was evaluated as C.

### Quantitative quality evaluation of concrete surface (A):

In accordance with the water permeability test shown in "Test methods of surface penetrants for concrete structures" (JSCE-K571), a funnel having a diameter of 75 mm was placed on a concrete placing surface which had been subjected to trowel finishing at a time suitable for trowel finishing, and the water permeability was measured with a head height of 250 mm. The concrete surface was evaluated as C when the permeated water amount (water permeability) was 60% or more, as B when the water permeability was 45% or more and less than 60%, as A when the water permeability was 30% or more and less than 45%, and as AA when the water permeability was less than 30%, as compared with the concrete in which the accelerator for concrete surface finishing was not mixed. The evaluation was performed at each unloading time, before, during, and after.

### Quantitative quality evaluation of concrete surface (B):

A test piece was prepared by filling concrete in a formwork of 30 × 30 × 20 cm, and 25 cycles were carried out in accordance with the ASTM C672 method, using 4% aqueous CaCl₂ as a test liquid for flooding, and a freeze-thaw process consisting of 16 hours at -18°C, 6 hours at +23°C, and 1 hour of a cooling and heating process. Visual evaluation was performed at 5 cycles and at 25 cycles.

The surface was visually evaluated according to the following evaluation criteria.
0: No flaking
1: No exposure of the coarse aggregate, and very slight flaking with a maximum deterioration depth of about 3 mm
2: Mild flaking (degree located between evaluation 1 and evaluation 3)
3: Moderate flaking with some coarse aggregate exposure observed
4: Strong flaking (degree located between evaluation 3 and evaluation 5)
5: Severe flaking in which exposure of coarse aggregate is observed over the entire surface

Further, in addition to visual observation of the surface every 5 cycles, the scaled concrete was sampled, dried at 40°C for 3 hours or longer, and weighed. The total scaling amount up to 25 cycles of the concrete in which the accelerator for concrete surface finishing was not mixed was set to 100 and evaluated.

The evaluation was performed at each unloading time, before, during, and after.

Concrete flow retentivity: The slump was evaluated as the slump at each unloading time, before, during, and after the concrete mixed with the accelerator for concrete surface finishing under each condition when the slump at each unloading time, before, during, and after the concrete not mixed with the accelerator for concrete surface finishing at 90 minutes after the concrete was unloaded from the agitator vehicle was defined as 0.

Compressive strength: With respect to concrete filled in a formwork of ϕ10 × 20 cm, the strength at 24 hours of age was measured in accordance with JIS-A-1108 "Method of test for compressive strength of concrete". The compressive strength of the concrete mixed with the accelerator for concrete surface finishing under each condition was evaluated by setting the compressive strength of the concrete not mixed with the accelerator for concrete surface finishing at each unloading time, before, during, and after unloading to 100.

Observation of uniformity of concrete by stirring (Uniformity of stirring): When the time difference between the shortest time and the longest time of the optimum time until trowel finishing before, during, and after concrete discharge was less than 2 hours, it was defined as A, when the time difference was 2 hours or longer and shorter than 3 hours, it was defined as B, and when the time difference was 3 hours or longer, it was defined as C. If A and B, there is no problem in practical use.

Visual observation of dispersion of paper bags: The case where a piece of water-soluble paper remaining undissolved in the concrete unloaded from the agitator vehicle was not found was defined as A, the case where a little piece of water-soluble paper was found was defined as B, and the case where many pieces of water-soluble paper were found was defined as C. If A and B, there is no problem in practical use.

Air amount: The air amount was measured in accordance with JIS-A1116 "Mass Method".

**Table 1**

| Experiment No. | Pulp content (%) | Bag dimensions (cm) | Number of bags to be charged (bags) | Total charging amount of accelerator for concrete surface finishing (kg) | Dispersion time (second) | Charging form of accelerator for concrete surface finishing | Observation of dispersion of paper bag | Remarks |
|---|---|---|---|---|---|---|---|---|
| 1-1 | No accelerator for concrete surface finishing | | | | | | | Comparative Example |
| 1-2 | | | | | | | | |
| 1-3 | | | | | | | | |
| 1-4 | - | - | - | - | | as a powder | - | Reference Example |
| 1-5 | | | | | | | | |
| 1-6 | | | | | | | | |
| 1-7 | 85 (water-soluble paper) | H:30 | 6 | 13.5 | 15 | in a bag | A | Inventive Example |
| 1-8 | | W:30 | | | | | | |
| 1-9 | | D: 5 | | | | | | |
| 1-10 | 85 (water-soluble paper) | H:40 | 10 | 40 | 15 | in a bag | A | Inventive Example |
| 1-11 | | W:20 | | | | | | |
| 1-12 | | D: 10 | | | | | | |
| 1-13 | 85 (water-soluble paper) | H:30 | 15 | 67.5 | 15 | in a bag | B | Inventive Example |
| 1-14 | | W:30 | | | | | | |
| 1-15 | | D: 5 | | | | | | |
| 1-16 | 75 (water-soluble paper) | H:30 | 6 | 13.5 | 20 | in a bag | A | Inventive Example |
| 1-17 | | W:30 | | | | | | |
| 1-18 | | D: 5 | | | | | | |
| 1-19 | 95 (water-soluble paper) | H:30 | 6 | 13.5 | 18 | in a bag | A | Inventive Example |
| 1-20 | | W:30 | | | | | | |
| 1-21 | | D: 5 | | | | | | |
| 1-22 | water-soluble film | H:30 | 6 | 13.5 | 25 | in a bag | A | Comparative Example |
| 1-23 | | W:30 | | | | | | |
| 1-24 | | D: 5 | | | | | | |
| 1-25 | 65 (non -water-soluble paper) | H:30 | 6 | 13.5 | *Not dispersed and remaining | in a bag | C | Comparative Example |
| 1-26 | | W:30 | | | | | | |
| 1-27 | | D: 5 | | | | | | |

**Table 2**

| Experiment No. | Sampling time | Concrete flow retentivity (slump, cm) | Trowel finishing time | Air amount (%) | Concrete surface | Uniformity of stirring | Compressive strength (%) | Remarks |
|---|---|---|---|---|---|---|---|---|
| 1-1 | Before | 0 | 18 | 4.5 | C | - | 100 | Comparative Example |
| 1-2 | During | 0 | 17 | 4.2 | C | | 100 | |
| 1-3 | After | 0 | 17 | 5.0 | C | | 100 | |
| 1-4 | Before | +1 | 8 | 5.2 | A | B | 110 | Reference Example |
| 1-5 | During | -2 | 7 | 4.8 | A | | 118 | |
| 1-6 | After | 0 | 6 | 3.8 | A | | 115 | |
| 1-7 | Before | +1.5 | 6 | 4.2 | A | A | 121 | Inventive Example |
| 1-8 | During | 0 | 5 | 4.1 | A | | 116 | |
| 1-9 | After | -1 | 6 | 3.9 | A | | 118 | |
| 1-10 | Before | -2 | 6 | 4.7 | A | A | 119 | Inventive Example |
| 1-11 | During | -0.5 | 6 | 4.8 | A | | 121 | |
| 1-12 | After | 0 | 6 | 4.5 | A | | 114 | |
| 1-13 | Before | -1 | 7 | 4.6 | A | A | 109 | Inventive Example |
| 1-14 | During | +1 | 6 | 4.2 | A | | 118 | |
| 1-15 | After | +2 | 6 | 3.7 | A | | 114 | |
| 1-16 | Before | -0.5 | 6 | 4.1 | A | A | 122 | Inventive Example |
| 1-17 | During | 0 | 6 | 4.0 | A | | 116 | |
| 1-18 | After | +1 | 5 | 4.1 | A | | 114 | |
| 1-19 | Before | +1.5 | 5 | 5.2 | A | A | 110 | Inventive Example |
| 1-20 | During | 0 | 5 | 5.0 | A | | 115 | |
| 1-21 | After | +2 | 6 | 4.3 | A | | 117 | |
| 1-22 | Before | -4 | 9 | 8.0 | C | C | 80 | Comparative Example |
| 1-23 | During | -4 | 7 | 7.5 | C | | 89 | |
| 1-24 | After | -3 | 6 | 7.2 | C | | 80 | |
| 1-25 | Before | -2 | 12 | 5.5 | C | C | 105 | Comparative Example |
| 1-26 | During | +1 | 17 | 5.2 | C | | 106 | |
| 1-27 | After | +2.5 | 18 | 5.1 | C | | 110 | |

**Table 3**

| Experiment No. | Sampling time | Quantitative quality evaluation of concrete surface (A) | | Quantitative quality evaluation of concrete surface (B) | | | Remarks |
|---|---|---|---|---|---|---|---|
| | | | | Visual observation of scaling | | Scaling amount (%) | |
| | | Concrete surface quality | Water permeability (%) | 5 cycles | 25 cycles | | |
| 1-1 | Before | C | 100 | 5 | 5 | 100 | Comparative Example |
| 1-2 | During | C | 100 | 4 | 5 | 100 | |
| 1-3 | After | C | 100 | 4 | 5 | 100 | |
| 1-4 | Before | A | 32 | 0 | 3 | 30 | Reference Example |
| 1-5 | During | AA | 25 | 0 | 2 | 26 | |
| 1-6 | After | AA | 28 | 0 | 3 | 21 | |
| 1-7 | Before | AA | 19 | 0 | 3 | 18 | Inventive Example |
| 1-8 | During | AA | 20 | 0 | 2 | 25 | |
| 1-9 | After | AA | 23 | 0 | 3 | 20 | |
| 1-10 | Before | AA | 24 | 0 | 2 | 27 | Inventive Example |
| 1-11 | During | AA | 21 | 0 | 3 | 18 | |
| 1-12 | After | AA | 22 | 0 | 3 | 21 | |
| 1-13 | Before | AA | 27 | 0 | 3 | 19 | Inventive Example |
| 1-14 | During | AA | 25 | 0 | 2 | 25 | |
| 1-15 | After | AA | 24 | 0 | 3 | 16 | |
| 1-16 | Before | AA | 24 | 0 | 3 | 22 | Inventive Example |
| 1-17 | During | AA | 25 | 0 | 3 | 24 | |
| 1-18 | After | AA | 19 | 0 | 3 | 25 | |
| 1-19 | Before | AA | 23 | 0 | 2 | 21 | Inventive Example |
| 1-20 | During | AA | 21 | 0 | 3 | 26 | |
| 1-21 | After | AA | 18 | 0 | 3 | 35 | |
| 1-22 | Before | C | 71 | 2 | 4 | 57 | Comparative Example |
| 1-23 | During | C | 76 | 3 | 3 | 61 | |
| 1-24 | After | C | 72 | 1 | 4 | 62 | |
| 1-25 | Before | C | 78 | 1 | 3 | 49 | Comparative Example |
| 1-26 | During | C | 73 | 2 | 3 | 55 | |
| 1-27 | After | C | 80 | 1 | 4 | 51 | |

From Table 1, Table 2 and Table 3, in a low-temperature environment such as an outside air temperature of 2°C to 8°C, the charging method according to the present invention significantly shortens the time required for trowel finishing of concrete having a slump of 12 ± 2.5 cm immediately after kneading, enables finishing of concrete surfaces in a good state, provides high-quality concrete surfaces that are densified and less likely to deteriorate, does not adversely affect the fluidity of concrete, and increases compressive strength. Further, it is found that uniformly mixed concrete can be prepared by using water-soluble paper made of pulp. Further, even if the size of the bag of the water-soluble paper is within an appropriate range, it is desirable that the number of bags to be charged is 10 or less.

### (Experimental Example 2)

The accelerator for concrete surface finishing used in Experiment No. 1-7 of Experimental Example 1 was subjected to the same experiment and test as in Experimental Example 1 except that the average particle diameter of the aluminum sulfonate was changed as shown in Table 4. The test results are shown in Tables 5 and 6.

**Table 4**

| Experiment No. | Aluminum sulfonate (Average particle diameter) | Remarks |
|---|---|---|
| 2-1 | Aluminum sulfonate B (492 µm) | Inventive Example |
| 2-2 | | |
| 2-3 | | |
| 2-4 | Aluminum sulfonate D (211 µm) | Inventive Example |
| 2-5 | | |
| 2-6 | | |
| 2-7 | Aluminum sulfonate C (621 µm) | Inventive Example |
| 2-8 | | |
| 2-9 | | |

**Table 5**

| Experiment No. | Sampling time | Concrete flow retentivity (slump, cm) | Trowel finishing time | Air amount (%) | Concrete surface | Uniformity of stirring | Compressive strength (%) | Remarks |
|---|---|---|---|---|---|---|---|---|
| 1-1 | Before | 0 | 18 | 4.5 | C | | 100 | Comparative Example |
| 1-2 | During | 0 | 17 | 4.2 | C | | 100 | |
| 1-3 | After | 0 | 17 | 5.0 | C | | 100 | |
| 1-7 | Before | +1.5 | 6 | 4.2 | A | A | 121 | Inventive Example |
| 1-8 | During | 0 | 5 | 4.1 | A | | 116 | |
| 1-9 | After | -1 | 6 | 3.9 | A | | 118 | |
| 2-1 | Before | 0 | 6 | 3.7 | A | A | 112 | Inventive Example |
| 2-2 | During | -1 | 7 | 3.9 | A | | 116 | |
| 2-3 | After | +1 | 6 | 3.5 | A | | 117 | |
| 2-4 | Before | +1.5 | 5 | 3.9 | A | A | 115 | Inventive Example |
| 2-5 | During | +1 | 6 | 4.0 | A | | 114 | |
| 2-6 | After | 0 | 5 | 3.8 | A | | 121 | |
| 2-7 | Before | 0 | 10 | 4.5 | A | A | 110 | Inventive Example |
| 2-8 | During | -0.5 | 12 | 4.1 | A | | 121 | |
| 2-9 | After | 0 | 11 | 4.2 | A | | 117 | |

**Table 6**

| Experiment No. | Sampling time | Quantitative quality evaluation of concrete surface (A) | | Quantitative quality evaluation of concrete surface (B) | | | Remarks |
|---|---|---|---|---|---|---|---|
| | | | | Visual observation of scaling | | Scaling amount (%) | |
| | | Concrete surface quality | Water permeability (%) | 5 cycles | 25 cycles | | |
| 1-1 | Before | C | 100 | 5 | 5 | 100 | Comparative Example |
| 1-2 | During | C | 100 | 4 | 5 | 100 | |
| 1-3 | After | C | 100 | 4 | 5 | 100 | |
| 1-7 | Before | A | 32 | 0 | 3 | 30 | Inventive Example |
| 1-8 | During | AA | 25 | 0 | 2 | 26 | |
| 1-9 | After | AA | 28 | 0 | 3 | 21 | |
| 2-1 | Before | AA | 19 | 1 | 3 | 29 | Inventive Example |
| 2-2 | During | AA | 20 | 0 | 2 | 24 | |
| 2-3 | After | AA | 23 | 0 | 3 | 25 | |
| 2-4 | Before | AA | 24 | 0 | 3 | 22 | Inventive Example |
| 2-5 | During | AA | 21 | 0 | 2 | 25 | |
| 2-6 | After | AA | 22 | 1 | 3 | 19 | |
| 2-7 | Before | AA | 27 | 0 | 2 | 26 | Inventive Example |
| 2-8 | During | AA | 25 | 1 | 3 | 22 | |
| 2-9 | After | AA | 24 | 0 | 3 | 21 | |

It can be seen from Tables 5 and 6 that when the average particle diameter of the aluminum sulfonate is 500 pm or less, the trowel finishing time is 10 hours or less, and the function of the accelerator for concrete surface finishing can be exhibited more satisfactorily.

### (Experimental Example 3)

An experiment was carried out in the same manner as in Experimental Example 1 except that the sealing method was changed as shown in Table 7 for the water-soluble paper bag used in Experiment No. 1-7 of Experimental Example 1. The sealing method was heat seal, adhesive seal, or thread sewing seal. The same test as in Experimental Example 1 was conducted. The test results are shown in Tables 8 and 9.

### <Sealing method>

Heat seal: Heating was performed for 10 seconds using FR-450-10 (manufactured by Fuji Impulse Co., Ltd.).
Adhesive seal: BBX909 (manufactured by Cemedine Co., Ltd.) was used to apply the adhesive in a width of 0.5 cm from the opening, and sealing was performed.
Thread sewing seal: A1-98 (DS-9C) (manufactured by Newlong Macine Works, Ltd.) was used for sealing at a 1 cm pitch.

**Table 7**

| Experiment No. | Pulp content (%) | Number of bags to be charged (bags) | Dispersion time (second) | Charging form of accelerator for concrete surface finishing | Observation of dispersion of paper bag | Sealing method | Remarks |
|---|---|---|---|---|---|---|---|
| 1-7 | 85 (water-soluble paper) | 6 | 15 | in a bag | A | Pressure-adhesive seal | Inventive Example |
| 1-8 | | | | | | | |
| 1-9 | | | | | | | |
| 3-1 | 85 (water-soluble paper) | 6 | 21 | in a bag | A | Heat seal | Inventive Example |
| 3-2 | | | | | | | |
| 3-3 | | | | | | | |
| 3-4 | 85 (water-soluble paper) | 6 | 19 | in a bag | A | Thread sewing seal | Inventive Example |
| 3-5 | | | | | | | |
| 3-6 | | | | | | | |
| 3-7 | 85 (water-soluble paper) | 6 | 24 | in a bag | A | Adhesive seal | Inventive Example |
| 3-8 | | | | | | | |
| 3-9 | | | | | | | |

**Table 8**

| Experiment No. | Sampling time | Concrete flow retentivity (slump, cm) | Trowel finishing time | Air amount (%) | Concrete surface | Uniformity of stirring | Compressive strength (%) | Remarks |
|---|---|---|---|---|---|---|---|---|
| 1-1 | Before | 0 | 18 | 4.5 | C | - | 100 | Comparative Example |
| 1-2 | During | 0 | 17 | 4.2 | C | | 100 | |
| 1-3 | After | 0 | 17 | 5.0 | C | | 100 | |
| 1-7 | Before | +1.5 | 6 | 4.2 | A | A | 121 | Inventive Example |
| 1-8 | During | 0 | 5 | 4.1 | A | | 116 | |
| 1-9 | After | -1 | 6 | 3.9 | A | | 118 | |
| 3-1 | Before | +1 | 6 | 4.0 | A | A | 115 | Inventive Example |
| 3-2 | During | -2 | 7 | 3.9 | A | | 114 | |
| 3-3 | After | 0 | 6 | 3.8 | A | | 111 | |
| 3-4 | Before | +1.5 | 6 | 4.0 | A | A | 116 | Inventive Example |
| 3-5 | During | 0 | 7 | 4.1 | A | | 118 | |
| 3-6 | After | -1 | 6 | 3.9 | A | | 121 | |
| 3-7 | Before | -2 | 7 | 4.6 | A | A | 110 | Inventive Example |
| 3-8 | During | -0.5 | 7 | 4.2 | A | | 121 | |
| 3-9 | After | 0 | 6 | 4.1 | A | | 117 | |

**Table 9**

| Experiment No. | Sampling time | Quantitative quality evaluation of concrete surface (A) | | Quantitative quality evaluation of concrete surface (B) | | | Remarks |
|---|---|---|---|---|---|---|---|
| | | | | Visual observation of scaling | | Scaling amount (%) | |
| | | Concrete surface quality | Water permeability (%) | 5 cycles | 25 cycles | | |
| 1-1 | Before | C | 100 | 5 | 5 | 100 | Comparative Example |
| 1-2 | During | C | 100 | 4 | 5 | 100 | |
| 1-3 | After | C | 100 | 4 | 5 | 100 | |
| 1-7 | Before | AA | 19 | 0 | 3 | 18 | Inventive Example |
| 1-8 | During | AA | 20 | 0 | 2 | 25 | |
| 1-9 | After | AA | 23 | 0 | 3 | 20 | |
| 3-1 | Before | AA | 22 | 0 | 3 | 27 | Inventive Example |
| 3-2 | During | AA | 24 | 0 | 2 | 18 | |
| 3-3 | After | AA | 23 | 0 | 3 | 21 | |
| 3-4 | Before | AA | 25 | 0 | 3 | 19 | Inventive Example |
| 3-5 | During | AA | 26 | 0 | 2 | 25 | |
| 3-6 | After | AA | 23 | 0 | 2 | 16 | |
| 3-7 | Before | AA | 22 | 0 | 3 | 22 | Inventive Example |
| 3-8 | During | AA | 27 | 0 | 2 | 24 | |
| 3-9 | After | AA | 24 | 0 | 3 | 25 | |

From Table 8 and Table 9, it is understood that in this Example, there is no entrainment of air regardless of the sealing method of the water-soluble paper bag, the dispersibility of the water-soluble paper is good, and uniform concrete can be obtained regardless of the concrete unloading time.

### Industrial Applicability

The charging method using an inclusion body obtained by enclosing an accelerator for concrete surface finishing in a package composed of water-soluble paper significantly shortens the time for trowel finishing in a low-temperature environment, enables the concrete surface to be finished in a good state, does not adversely affect the fluidity of the concrete, and enhances the compressive strength. Since the waiting time from concrete placing to trowel finishing can be greatly shortened especially in a low temperature environment, this method is suitable for civil engineering and construction fields, leads to the work efficiency of a plasterer, and has the effect of reducing overtime work at a construction site.

## Claims

1. A method of charging an accelerator for concrete surface finishing, comprising: enclosing an accelerator for concrete surface finishing in a package composed of water-soluble paper to form an inclusion body; and charging the inclusion body into a concrete mixer and/or an agitator vehicle to mix with the concrete.

2. The method of charging an accelerator for concrete surface finishing according to claim 1, wherein the water-soluble paper comprises wood pulp as a raw material.

3. The method of charging an accelerator for concrete surface finishing according to claim 2, wherein the raw material of the water-soluble paper further comprises at least one water-soluble paper additive selected from the group consisting of polysaccharides, poval, cellulose, polyvinyl alcohol, carbomethyl cellulose, and starch, and the content of the wood pulp is 75 to 95% by mass with respect to the total of the wood pulp and the water-soluble paper additive.

4. The method of charging an accelerator for concrete surface finishing according to any one of claims 1 to 3, wherein when 10 g of the water-soluble paper is added to 500 mL of water at 20°C which has been stirred at 800 rpm with a stirrer, an aggregate derived from the water-soluble paper cannot be visually observed within 30 seconds after the addition.

5. The method of charging an accelerator for concrete surface finishing according to any one of claims 1 to 4, wherein the package is at least one of a bag and a box.

6. The method of charging an accelerator for concrete surface finishing according to any one of claims 1 to 5, wherein when the accelerator for trowel finishing is mixed in an amount of 4 kg/m³ with respect to 1 m³ of concrete, a time from immediately after placing concrete after the mixing until surface finishing of concrete becomes possible is shortened at an ambient temperature of 2 to 8°C, as compared with a concrete having the same mix proportion except that the accelerator for concrete surface finishing is not mixed.

7. The method of charging an accelerator for concrete surface finishing according to any one of claims 1 to 6, wherein when the accelerator for trowel finishing is mixed in an amount of 4 kg/m³ with respect to 1 m³ of concrete, the quality of the finished surface of the concrete after the mixing is reduced by 60% or more in water permeability and scaling amount, respectively, as compared with a concrete having the same mix proportion except that the accelerator for concrete surface finishing is not mixed.

8. The method of charging an accelerator for concrete surface finishing according to any one of claims 1 to 7, wherein the accelerator for trowel finishing comprises an aluminum sulfonate.

9. The method of charging an accelerator for concrete surface finishing according to claim 8, wherein the aluminum sulfonate has an average particle diameter of 500 pm or less.

10. The method of charging an accelerator for concrete surface finishing according to claim 8 or 9, wherein the accelerator for trowel finishing further comprises at least one selected from the group consisting of a melamine-based compound, an oxycarboxylic acid and/or a salt thereof.

11. The method of charging an accelerator for concrete surface finishing according to any one of claims 1 to 10, wherein the inclusion body is directly charged into concrete in a concrete mixer and/or an agitator vehicle, or the inclusion body is charged into the concrete mixer and/or the agitator vehicle by air force feed.
